# EUROPÄISCHE PATENTSCHRIFT

(11) **EP 2 944 178 B1**
(45) Veröffentlichungstag und Bekanntmachung des Hinweises auf die Patenterteilung: **06.06.2018**
(21) Anmeldenummer: 15157277.3
(22) Anmeldetag: 03.03.2015
(51) Int. Cl.: A01D 41/127, G01F 23/24

(54) **MESSSYSTEM ZUR ERMITTLUNG DES FÜLLSTANDES**
MEASURING SYSTEM FOR MEASURING THE FILL LEVEL
SYSTÈME DE MESURE DESTINÉ À DÉTERMINER LE NIVEAU DE REMPLISSAGE

(30) Priorität: 13.05.2014 DE 102014106736
(43) Veröffentlichungstag der Anmeldung: 18.11.2015
(73) Patentinhaber: CLAAS Selbstfahrende Erntemaschinen GmbH, 33428 Harsewinkel (DE)
(72) Erfinder: Schröder, Axel, 33330 Gütersloh (DE); Söbke, Daniel, 48308 Senden (DE); Adam, Steve, 01156 Dresden (DE)

(56) Entgegenhaltungen:
- EP-A1- 2 250 871
- EP-A1- 2 386 837
- DE-B3-102009 042 506
- JP-A- 2014 042 470
- US-A- 3 511 090

## Beschreibung

Die Erfindung betrifft einen Mähdrescher mit einem Messsystem zur Ermittlung des Füllstandes von Schüttgut mit den Merkmalen des Oberbegriffs von Anspruch 1.

Mähdrescher und andere selbstfahrende Erntemaschinen weisen einen Korntank auf, welcher im Betrieb des Mähdreschers mit dem geernteten Korngut aus dem Druschprozess mittels eines Kornelevators befüllt wird. Aus dem Korntank kann das Korngut dann z. B. über ein Kornauslaufrohr in ein separates Transportfahrzeug geleert werden. Zur Steigerung der Wirtschaftlichkeit einer solchen Erntemaschine ist eine möglichst genaue Kenntnis des Füllstands im laufenden Betrieb der Erntemaschine wichtig, da sich so Fahrtstrecken auf dem Bestand besser planen und geeignete Rendezvouspunkte zum Überladen des Kornes auf das Transportfahrzeug genauer bestimmen lassen. Ebenso lassen sich Standzeiten der Erntemaschine verringern.

Aus dem Stand der Technik und speziell aus der EP 1 714 542 A1, von welcher die vorliegende Erfindung ausgeht, ist es bekannt, einen Entfernungsmesser zur berührungslosen Bestimmung des Füllstandes im Korntank zu verwenden. Allerdings besteht bei diesem Ansatz der Nachteil, dass die Staubentwicklung im Korntank die Qualität der Messung einschränkt. Ferner bedeutet die Anordnung des Entfernungsmessers oberhalb des Korntanks eine wesentlich größere Gesamthöhe des Mähdreschers.

Ausgehend von diesem Stand der Technik besteht das Problem der Erfindung also darin, das bekannte Messsystem zur Ermittlung des Füllstandes von Schüttgut in einem Behälter so weiterzuentwickeln und zu verbessern, dass eine höhere Genauigkeit der Messung sichergestellt wird bei gleichzeitiger Kompaktheit des Messsystems.

Bezogen auf einen Mähdrescher mit einem Messsystem zur Ermittlung des Füllstandes mit den Merkmalen des Oberbegriffs von Anspruch 1 wird diese Aufgabe durch die Merkmale des kennzeichnenden Teils von Anspruch 1 gelöst.

Wesentlich für die Erfindung ist die Erkenntnis, dass ein elektrischer Bandsensor zur mechanischen Betätigung sowohl eine hinreichende Genauigkeit der Messung ermöglicht als auch durch einen robusten, kompakten und vergleichsweise einfachen Aufbau verwirklicht werden kann. Ein solcher elektrischer Bandsensor erlaubt es elektrisch zu erfassen, auf welchem bzw. auf einem wie großen Streckenanteil des Bandsensors eine Betätigung stattfindet, wodurch wiederum der Füllstand im Behälter bestimmt werden kann.

Die Unteransprüche 2 bis 4 wiederum betreffen bevorzugte Merkmale des Aufbaus des elektrischen Bandsensors.

Gemäß den Unteransprüchen 5 und 6 kann zusätzlich zu dem Bandsensor noch ein weiterer Sensor im Behälter angeordnet sein, welcher durch seine zusätzliche Messung eine ergänzende Information zu der Messung des Bandsensors bereitstellt.

Die Unteransprüche 8 und 9 sehen vor, dass mittels des obigen weiteren Sensors eine Korrekturfunktion ermittelt wird, die dann auf die Messung des Bandsensors angewandt werden kann. Eine solche Korrekturfunktion kann sich insbesondere auf die Geometrie eines Schüttkegels beziehen, welcher in einem Korntank regelmäßig durch das Korngut gebildet wird, wobei der höchste Punkt eines solchen Schüttkegels regelmäßig beabstandet von einer Wandung des Korntanks liegt.

Die bevorzugte Ausgestaltung des Unteranspruchs 10 wiederum sieht vor, die gemessene oder berechnete Zufuhr in den Korntank von Erntegut sowie alternativ oder zusätzlich die gemessene oder berechnete Entladung des Ernteguts aus dem Korntank in die Ermittlung des Füllstandes ergänzend heranzuziehen.

Weitere Einzelheiten, Merkmale, Ziele und Vorteile der vorliegenden Erfindung werden nachfolgend anhand der Zeichnung eines bevorzugten Ausführungsbeispiels erläutert. In der Zeichnung zeigt
- Fig. 1: eine schematische Ansicht eines Mähdreschers mit einem Korntank und einem vorschlagsgemäßen Messsystem zur Ermittlung des Füllstands in dem Korntank,
- Fig. 2: eine schematische Querschnittsansicht des elektrischen Bandsensors des Messsystems der Fig. 1. und
- Fig. 3: ein schematisches Modell zur Bestimmung einer Position des elektrischen Bandsensors der Fig. 2 zur schüttkegelunabhängigen Messung.

Das vorschlagsgemäße Messsystem dient der Ermittlung des Füllstandes von landwirtschaftlichem Schüttgut 1 und weist einen Behälter 2 zur Aufnahme des Schüttguts 1 auf. Vorliegend und bevorzugt handelt es sich bei dem Behälter 2 um den Korntank 2a eines Mähdreschers 3. Entsprechend handelt es sich bei dem Schüttgut 1 bevorzugt um Erntegut 1a. Das Messsystem weist ferner eine Sensoranordnung 4 zur Erfassung des Füllstandes in dem Behälter 2 auf.

Dieses Messsystem ist vorschlagsgemäß dadurch gekennzeichnet, dass die Sensoranordnung 4 einen elektrischen Bandsensor 5 zur mechanischen Betätigung durch das Schüttgut 1 aufweist. Unter einem solchen elektrischen Bandsensor 5 ist hier und nachfolgend grundsätzlich ein bandartig ausgestalteter Sensor zu verstehen, welcher auf eine mechanische Betätigung, bei welcher es sich insbesondere um eine Druckbetätigung handeln kann, anspricht und auf einem elektrischen Erfassungsprinzip basiert. Weitere Einzelheiten zu einem solchen elektrischen Bandsensor 5 werden untenstehend beschrieben.

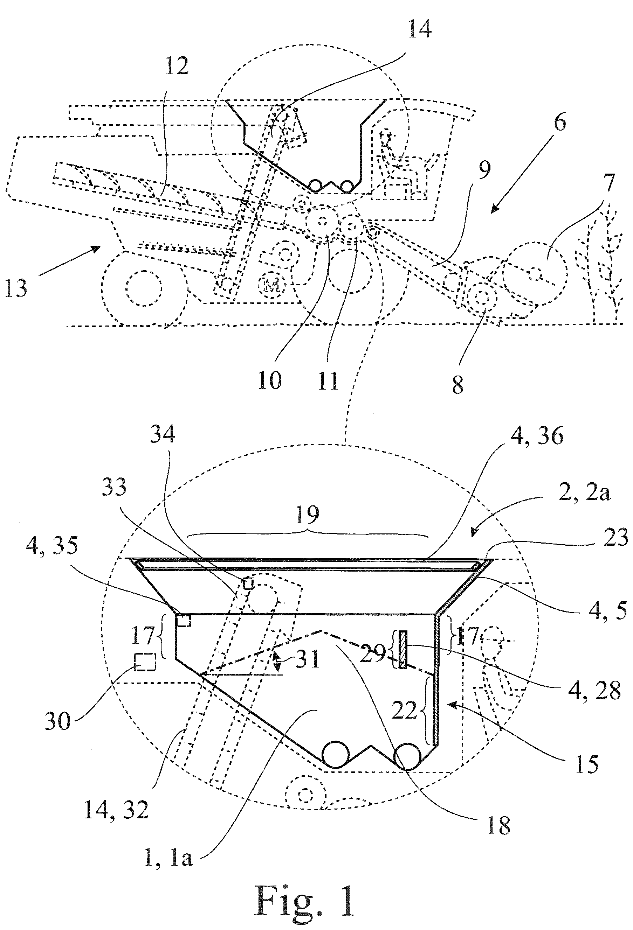

Wie in der Fig. 1 dargestellt, ist der Mähdrescher 3 in an sich bekannter Weise dazu eingerichtet, mit seiner Einzugsanordnung 6, zu deren Bestandteilen eine Haspel 7, eine Einzugsschnecke 8 sowie ein Schrägförderer 9 gehören, Erntegut aufzunehmen und zum Dreschwerk mit Dreschtrommel 10 und Dreschkorb 11 zu fördern. Über die nachgelagerte Trenneinrichtung 12 sowie die Reinigungsvorrichtung 13 wird das Korngut im engeren Sinne von dem Erntegut getrennt und gelangt über einen Kornelevator 14 in den bereits genannten Korntank 2a. Erfindungsgemäß, und wie in der Fig. 1 dargestellt, ist vorgesehen, dass der Bandsensor 5 an einer Wandung 15 des Behälters 1 angeordnet ist. Unter einer solchen Wandung 15 ist insbesondere eine seitliche - statt einer oberen oder unteren - Wandung 15 des Behälters 1 und hier also des Korntanks 2a zu verstehen. Die Anordnung des Bandsensors 4 an einer solchen Wandung 15 gestaltet sich besonders einfach. In einer Ausführungsform, die nicht unter die Erfindung fällt, kann der Bandsensor 5 auch mit einem Wandabstand 16 beabstandet zu der Wandung 15 des Behälters 2 angeordnet sein. Der Begriff Wandabstand 16 bezeichnet hier einfach den Abstand des Bandsensors 5 zu der insbesondere seitlichen Wandung 15. Speziell kann der Wandabstand 16 auf einen im Wesentlichen rechteckigen und insbesondere quadratischen Bereich 17 des Behälters 2 bezogen sein. Es ist speziell bei Korntanks 2a so, dass sich ihr Querschnitt in Richtung ihrer Höhe verändert, was auch speziell aus der Fig. 1 hervorgeht. Regelmäßig weisen Korntanks 2a einen im Wesentlichen rechteckigen oder quadratischen Bereich 17 auf, der sich in Höhenrichtung erstreckt und innerhalb dessen der Querschnitt des Korntanks 2a im Wesentlichen entsprechend rechteckig bzw. quadratisch und gleichbleibend ist. Dieser - in dem vorliegenden Ausführungsbeispiel - im Wesentlichen quadratische Bereich 17 ist in der Fig. 1 in seiner Höhenerstreckung gekennzeichnet.

Diese beabstandete Anordnung kann insbesondere dazu geeignet sein, bei der Messung zu berücksichtigen, dass das Schüttgut 1 regelmäßig keine ebene Kontur, sondern vielmehr einen Schüttkegel 18 in dem Behälter 2 bildet. Hinsichtlich eines solchen Wandabstandes 16 kann bevorzugt sein, dass er mindestens 10 % einer Seitenlänge 19 des im Wesentlichen rechteckigen bzw. quadratischen Bereichs 17 des Behälters 2 beträgt. Unter einer solchen Seitenlänge 19 kann hier und nachfolgend eine Seitenlänge des Querschnitts des im Wesentlichen rechteckigen bzw. quadratischen Bereichs 17 verstanden werden. Im Falle eines im Wesentlichen rechteckigen Querschnitts kann diese Seitenlänge 19 auch als arithmetisches Mittel der beiden, jeweils unterschiedlichen Seitenlängen 19 des Querschnitts angenähert werden. Schließlich kann im Falle eines im Wesentlichen kreisförmigen Querschnitts ebenso ein Durchmesser dieses im Wesentlichen kreisförmigen Querschnitts als Seitenlänge 19 im vorliegenden Sinne verstanden werden.

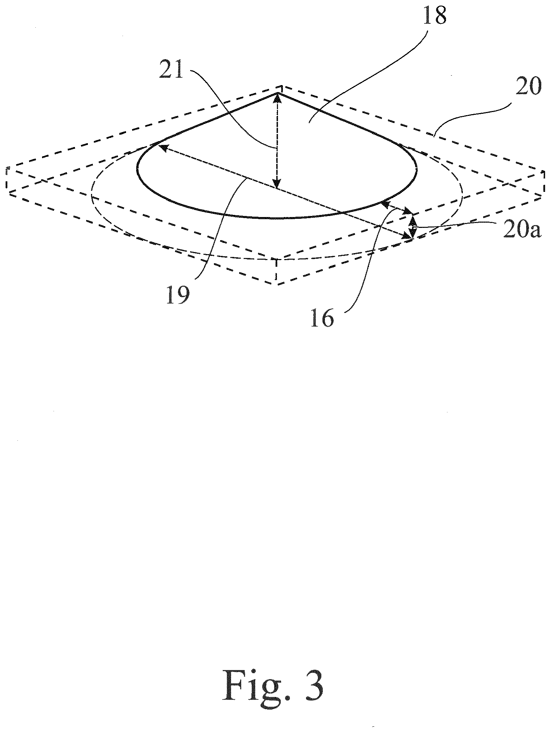

Zur absolut exakten Bestimmung des Einflusses eines solchen Schüttkegels 18 auf den Füllstand wäre prinzipiell eine Kenntnis der genauen Geometrie des Schüttkegels 18 erforderlich. Es hat sich aber herausgestellt, dass sich eine schüttkegelunabhängige Messung erreichen lässt, wenn der Bandsensor 5 mit einem Wandabstand 16 angeordnet wird, welcher eine schüttkegelunabhängige Messposition definiert. Die Herleitung wird in ihren Grundzügen in der Fig. 3 skizziert. Das Volumen des Schüttkegels 18 kann dabei durch das Volumen eines - gedachten - Quaders 20 angenähert werden, wobei der Quader 20 eine Quaderhöhe 20a aufweist, welche der gemessenen Höhe des Schüttkegels 18 an der schüttkegelunabhängigen Messposition entspricht. Die Seitenlänge des Quaders 20 entspricht wiederum der Seitenlänge 19 des im Wesentlichen rechteckigen bzw. quadratischen Bereichs 17 des Behälters 2. Insbesondere gilt diese Annäherung für diese schüttkegelunabhängige Messposition weitgehend unabhängig von der spezifischen Schüttkegelhöhe 21. Diese schüttkegelunabhängige Messposition entspricht einem Wandabstand 16 von zwischen 10 % und 15 % der Seitenlänge 19 des im Wesentlichen rechteckigen bzw. quadratischen Bereichs 17 des Behälters 2. Noch genauere Werte ergeben sich, wenn der Wandabstand 16 im Wesentlichen 12 % dieser Seitenlänge 19 entspricht. Bevorzugt ist dieser Wandabstand 16 auf einen im Wesentlichen mittigen Bereich derjenigen Wandung 15 bezogen, von dem aus der Wandabstand 16 speziell gerechnet wird. Dieser Sachverhalt ist auch in der Fig. 3 dargestellt. "Mittig" bedeutet hier also vorzugsweise eine mittige Position in einer Richtung, welche im Wesentlichen horizontal und senkrecht zu der Strecke des Wandabstands 16 ist. Erfindungsgemäß ist der Bandsensor 5 länglich ausgebildet und zur Messung der Streckenlänge einer mechanischen Betätigungslänge 22 eingerichtet. Mit anderen Worten kann durch den Bandsensor 5 erfasst werden, auf was für einer Länge er mechanisch und hier speziell durch Druck betätigt wurde. Gemäß der Darstellung der Fig. 1 wird der Bandsensor 5 bis zu derjenigen Stelle durch das Schüttgut 1 betätigt, welche der Füllstandshöhe an der Wandung 15 des Behälters 2 entspricht, an welcher der Bandsensor 5 angeordnet ist. Hier ist weiter bevorzugt, dass der Bandsensor 5 zur Erfassung bis zum maximalen Füllstand des Behälters 2 eingerichtet ist. Dies ist gemäß dem Ausführungsbeispiel der Fig. 1 dadurch verwirklicht, dass der Bandsensor 5 bis zu einer Oberkante 23 des Behälters 2 angeordnet ist. Insbesondere kann der Bandsensor 5 im Wesentlichen zumindest abschnittsweise vertikal angeordnet sein, was ebenfalls in der Fig. 1 dargestellt ist.

Ein bevorzugtes Wirkprinzip des Bandsensors 5 ist dadurch gegeben, dass der Bandsensor 5 als Widerstandsschaltleiste ausgebildet ist, deren elektrischer Widerstand in Abhängigkeit von dem Füllstand variiert. Dies bedeutet entsprechend auch, dass der elektrische Widerstand des Bandsensors 5 - welcher als Messwert erfasst werden kann - in Abhängigkeit von der obigen Streckenlänge der mechanischen Betätigungslänge 22 abhängt.

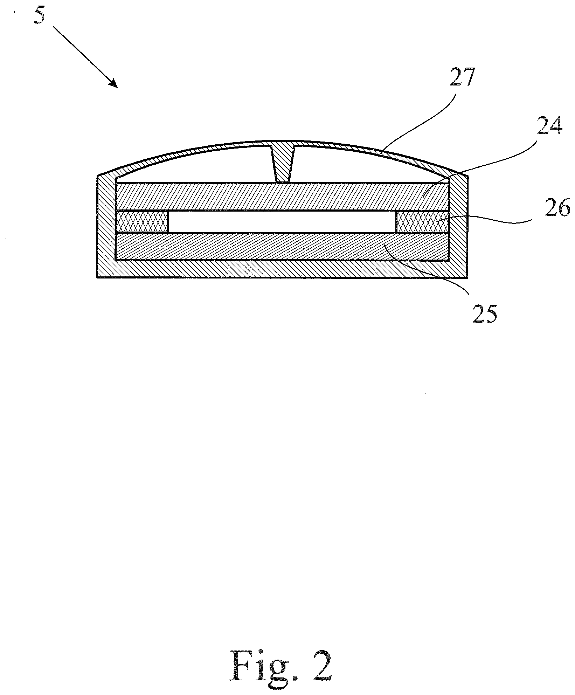

Ein solches elektrisches Verhalten kann insbesondere dadurch realisiert werden dass, wie hier in der Fig. 2 dargestellt, der Bandsensor 5 ein Leitermaterialband 24, ein Widerstandsband 25 und einen zwischen Leitermaterialband 24 und Widerstandsband 25 angeordneten und elektrisch isolierenden Abstandshalter 26 aufweist. Ferner weist der Bandsensor 5 hier noch eine flexible Ummantelung 27 auf. Diese Konstruktion führt vorzugsweise dazu, dass entlang der mechanischen Betätigungslänge 22 das Leitermaterialband 24 mit dem Widerstandsband 25 in elektrisch leitenden Kontakt gebracht wird. Es handelt sich also um eine Funktionsweise ähnlich einem Bandschalter, wobei jedoch ein solcher Bandschalter zwei Bänder aus leitendem Material aufweist und es daher beim Bandschalter im Wesentlichen unerheblich ist, ob die Betätigung des Bandschalters mit einer geringeren oder größeren Betätigungslänge 22 erfolgt. Durch die Ausgestaltung des einen Bands als Widerstandsband kann bei dem Bandsensor 5 hingegen diese Betätigungslänge 22 anhand des resultierenden und von der Betätigungslänge 22 abhängenden Widerstandes zwischen einem mit dem Leitermaterialband 24 verbundenen Pol einerseits und einem mit dem Widerstandsband 25 verbundenen Pol andererseits messtechnisch erfasst werden. Dabei kann der Bandsensor 5 auch aus einer Vielzahl von Einzelsegmenten bestehen, welche jeweils nach dem für den Bandsensor 5 beschriebenen Prinzip funktionieren.

Eine Bestimmung des Füllstands kann noch genauer erfolgen, wenn der Bandsensor 5 noch durch einen weiteren Sensor ergänzt wird. Daher ist bevorzugt vorgesehen, dass die Sensoranordnung 4 einen mechanisch betätigbaren und insbesondere druckempfindlichen Innensensor 28 zur Erfassung des Füllstands aufweist, welcher Innensensor 28 in dem Behälter 1 angeordnet ist. Um die Messung des Bandsensors 4 aus der Fig. 1 besonders gut ergänzen zu können, ist dieser Innensensor 28 vorzugsweise beabstandet zu der Wandung 15 angeordnet.

Prinzipiell kann es sich bei dem obigen Innensensor 28 auch um einen Bandsensor 5 im obigen Sinne, und sogar um einen zu dem Bandsensor 5 identischen Sensor handeln. Für eine Korrektur des Bandsensors 5 kann aber auch ein einfacherer Sensor ausreichen.

In diesem Zusammenhang ist es bevorzugt, dass der Innensensor 28 nur zur Erfassung des Füllstands in einem Füllstandsteilbereich 29 eingerichtet ist. Mit anderen Worten gibt es Füllstände, welche von dem Innensensor 28 nicht erfasst werden. Die Fig. 1 illustriert einen solchen Füllstandsteilbereich 29 des Innensensors 28 anschaulich. Dabei kann der Innensensor 28 auch aus einem einzelnen Membrantaster bestehen, welcher folglich nur einen Füllstand erfassen kann, der der Position dieses Membrantasters in dem Behälter 1 entspricht. Der Füllstandsteilbereich 29 entspricht dann im Wesentlichen einem einzigen Füllstandswert. Denkbar ist auch, dass der Innensensor 28 jeweils einen Membrantaster an dem unteren und an dem oberen Ende des Füllstandsteilbereichs 29 umfasst. Auf diese Weise kann ermittelt werden, wann der Füllstand den Füllstandsteilbereich 29 betritt, wann er ihn verlässt und wann der Füllstand innerhalb dieses Füllstandsteilbereichs 29 ist.

Die Messung eines solchen Innensensors 28 kann vorteilhafterweise mit der Messung des Bandsensors 5 kombiniert werden. In diesem Zusammenhang ist bevorzugt vorgesehen, dass das Messsystem eine Auswertungsvorrichtung 30 zur Berechnung des Füllstandes basierend auf einer Messung des Bandsensors 5 aufweist. Dann kann vorgesehen sein, dass zur Berechnung des Füllstandes die Messung des Bandsensors 5 auf eine Messung des Innensensors 28 bezogen wird. Ganz allgemein bedeutet dies, dass in eine verbesserte Berechnung des Füllstandes sowohl die Messung des Bandsensors 5 als auch die Messung des Innensensors 28 einbezogen wird.

Bevorzugt geschieht dies dadurch, dass durch den Bezug der Messung des Bandsensors 5 auf die Messung des Innensensors 28 eine Korrekturfunktion ermittelt wird, welcher auf die Berechnung des Füllstandes angewandt wird. Im einfachsten Fall umfasst die Anwendung einer solchen Korrekturfunktion die Multiplikation um einen Korrekturfaktor, welcher wiederum durch einen Vergleich der Messung des Bandsensors 5 mit der Messung des Innensensors 28 ermittelt wird.

Eine solche Korrekturfunktion kann insbesondere dem Umstand Rechnung tragen, dass das Schüttgut 1 - wie bereits oben beschrieben - einen Schüttkegel 18 bildet, sodass die gemessene Füllstandshöhe an der Wandung 15 des Behälters 2 regelmäßig geringer ist als die Füllstandshöhe weiter zur Mitte des Behälters 2 hin. Insbesondere ist sie geringer als die Schüttkegelhöhe 21. Daher wird bevorzugt, dass die Korrekturfunktion einen Schüttkegel 18 des Schüttguts 1 zur Berechnung des Füllstandes berücksichtigt. Diese Berücksichtigung kann dergestalt erfolgen, dass die Korrekturfunktion auf einem vorzugsweise errechneten Böschungswinkel 31 des Schüttkegels 18 basiert. Basierend auf der Messung durch den Bandsensor 5, der Messung des Innensensors 28 und des Abstandes des Innensensors 28 zu der Wandung 15 lässt sich dieser Böschungswinkel 31 des Schüttkegels 18 berechnen oder zunächst näherungsweise schätzen.

Wenngleich der Innensensor 28 ggf. nur für einen Teilbereich des Füllstands und speziell nur in dem obigen Füllstandsteilbereich 29 eine aktuelle Messung des Füllstands erlaubt, so kann dennoch eine in diesem Füllstandsteilbereich 29 ermittelte Korrekturfunktion auch dann nützlich angewandt werden, wenn dieser Füllstandsteilbereich 29 durch den Füllstand bereits wieder unter- oder überschritten wurde. Daher ist bevorzugt vorgesehen, dass die Korrekturfunktion auf die Berechnung des Füllstandes auch ohne Erfassung des Füllstands durch den Innensensor 28 angewandt wird und speziell, dass die Korrekturfunktion auf die Berechnung des Füllstandes angewandt wird, wenn der Füllstand außerhalb des Füllstandsteilbereichs 29 liegt.

Es können auch weitere Faktoren und insbesondere weitere Messungen in die Ermittlung des Füllstandes einfließen. So kann prinzipiell der Zufluss an Schüttgut in den Behälter 2 ermittelt werden. Daher ist bevorzugt vorgesehen, dass die Auswertungsvorrichtung 30 den Füllstand basierend auf einer Messung eines Erntegutstroms in einer Erntegutzuführung 32 zu dem Behälter 2 berechnet. Bei dieser Erntegutzuführung 32 kann es sich - wie in der Fig. 1 dargestellt - um den obigen Kornelevator 14 handeln. Hier wird der Erntegutstrom, welcher hier insbesondere ein Korngutstrom ist, über Elevatorpaddel 33 befördert. Eine Lichtschranke 34 kann dann eine Füllhöhe der Elevatorpaddel 33 erfassen, sodass das Volumen des zugeführten Schüttguts 1 berechnet werden kann.

Analog hierzu kann auch der Abfluss des Schüttguts 1 aus dem Behälter 2 grundsätzlich erfasst werden. Der Behälter 2 und hier speziell der Korntank 2a kann in an sich bekannter Weise entleert werden. Dann ist bevorzugt, dass die Auswertungsvorrichtung 30 den Füllstand basierend auf einem Entleerungswert von Schüttgut 1 in dem Behälter 2 berechnet. Dieser Entleerungswert kann ein beliebiger Wert zur Bestimmung der Entleerung des Füllstandes sein. Insbesondere kann es sich um einen Wert sein, welcher ein Entleerungsvolumen insgesamt oder ein Entleerungsvolumen pro Zeiteinheit angibt. Ein solcher Entleerungswert kann auch eine Entleerungsleistung - wobei hierunter auch eine Motordrehzahl zum Betreiben der Entleerung verstanden werden kann - und/oder eine Entleerungszeit sein oder darauf basieren.

Regelmäßig ist eine Berechnung des Füllstandes nur basierend auf dem obigen Erntegutstrom in der Erntegutzuführung 32 und dem obigen Entleerungswert zu ungenau, da mit zunehmender Zeit eine schleichende Abwanderung des errechneten Füllstandes von dem tatsächlichen Füllstand eintritt. Das vorschlagsgemäße Vorsehen des Bandsensors 5 verhindert eine solche Abwanderung.

Es können ferner unterstützend noch weitere Sensoren zur Erfassung des Schüttgutes 1 vorgesehen sein. So ist im Ausführungsbeispiel der Fig. 1 ein Randmembrantaster 35 vorgesehen, welcher das Erreichen eines Füllstandes i.H. v. 70 % eines maximalen Füllstandes erfasst. Darüber hinaus kann auch eine - hier nicht gezeigte - Sensoranordnung in dem Behälter 2 zur ergänzenden berührungslosen Erfassung des Füllstandes vorgesehen sein, worunter etwa eine Kamerasensoranordnung zur optischen Erfassung des Füllstandes oder eine entsprechende Sensoranordnung auf Ultraschall-, Laser-, oder Mikrowellenbasis verstanden werden kann.

Ebenso ist bevorzugt vorgesehen, dass die Auswertungsvorrichtung 30 den Füllstand basierend auf einem Erntegutparameter berechnet, wobei es sich dabei vorzugsweise um eine Erntegutart oder eine Erntegutfeuchte handelt. Dabei kann die Erntegutart oder die Erntegutfeuchte entweder automatisch durch einen entsprechenden Sensor ermittelt und der Auswertungsvorrichtung 30 zur Verfügung gestellt werden oder auf einer manuellen Eingabe eines Bedieners basieren.

Speziell weist die Sensoranordnung 4 bevorzugt einen mechanisch betätigbaren Überlaufsensor 36 zur Ermittelung eines maximalen Füllstands auf. Diesem Überlaufsensor 36 kann, wie aus der Fig. 1 erkennbar, ein Erfassungsbereich mit einer horizontalen Erstreckung zugeordnet sein, was speziell dadurch erreicht werden kann, dass der Überlaufsensor 36 im Wesentlichen umlaufend an der Wandung 15 angeordnet ist. Alternativ kann der Überlaufsensor 36 auch nur an einem Teilabschnitt der Wandung 15 angeordnet sein. Ebenso wie der Bandsensor 5 kann auch der Überlaufsensor 36 als Widerstandsschaltleiste ausgebildet sein. Grundsätzlich kann der Überlaufsensor 36 in seinem Aufbau identisch zu dem Bandsensor 5 ausgestaltet sein, sodass auch alle weiteren diesbezüglichen und bevorzugten Varianten sinngemäß gleich für den Überlaufsensor 36 gelten.

Abweichend von dem Bandsensor 5 kommt es aber bei dem Überlaufsensor 36 in der Regel nicht auf eine Erfassung der Betätigungslänge an, sondern nur darauf eine Betätigung an irgendeiner Stelle des Überlaufsensors 36 zu erfassen. Daher kann der Überlaufsensor 36 auch als Bandschalter ausgestaltet sein, wobei er also zwei Leitermaterialbänder - wie oben bereits prinzipiell beschrieben - umfassen kann. Bevorzugt ist entsprechend, dass der Überlaufsensor 36 das Vorliegen eines maximalen Füllstands im Behälter 2 auf eine punktuelle Betätigung ermittelt.

## Patentansprüche

1. Mähdrescher (3) mit einem Korntank (2a) zur Aufnahme von landwirtschaftlichem Schüttgut (1), insbesondere von Erntegut (1a) und einem Messsystem zur Ermittlung des Füllstandes des Schüttguts (1), eine Sensoranordnung (4) zur Erfassung des Füllstandes in dem Korntank (2a) umfassend,
**dadurch gekennzeichnet,**
**dass** die Sensoranordnung (4) einen elektrischen Bandsensor (5) zur mechanischen Betätigung durch das Schüttgut (1) in der Weise aufweist, dass der Bandsensor (5) länglich ausgebildet ist und zur Messung der Streckenlänge einer mechanischen Betätigungslänge (22) eingerichtet ist,
**dass** der Bandsensor an einer Wandung (15) des Korntanks (2a) angeordnet ist und
**dass** der Bandsensor (5) vorzugsweise zur Erfassung bis zum maximalen Füllstand des Korntanks (2a) eingerichtet ist.

2. Mähdrescher (3) nach Anspruch 1, **dadurch gekennzeichnet, dass** der Bandsensor (5) im Wesentlichen zumindest abschnittsweise vertikal angeordnet ist.

3. Mähdrescher (3) nach einem der Ansprüche 1 bis 2, **dadurch gekennzeichnet, dass** der Bandsensor (5) als Widerstandsschaltleiste ausgebildet ist, deren elektrischer Widerstand in Abhängigkeit von dem Füllstand variiert.

4. Mähdrescher (3) nach einem der Ansprüche 1 bis 3, **dadurch gekennzeichnet, dass** der Bandsensor (5) ein Leitermaterialband (24), ein Widerstandsband (25) und einen zwischen Leitermaterialband (24) und Widerstandsband (25) angeordneten und elektrisch isolierenden Abstandshalter (26) aufweist, vorzugsweise, sodass entlang der mechanischen Betätigungslänge (22) das Leitermaterialband (24) mit dem Widerstandsband (25) in elektrisch leitenden Kontakt gebracht wird.

5. Mähdrescher (3) nach einem der Ansprüche 1 bis 4, **dadurch gekennzeichnet, dass** die Sensoranordnung (4) einen mechanisch betätigbaren, vorzugsweise druckempfindlichen, Innensensor (28) zur Erfassung des Füllstands aufweist, welcher Innensensor (28) in dem Korntank (2a) angeordnet ist, vorzugsweise beabstandet zu der Wandung (15) angeordnet ist.

6. Mähdrescher (3) nach Anspruch 5, **dadurch gekennzeichnet, dass** der Innensensor (28) nur zur Erfassung des Füllstands in einem Füllstandsteilbereich (29) eingerichtet ist.

7. Mähdrescher (3) nach einem der Ansprüche 1 bis 6, **dadurch gekennzeichnet, dass** das Messsystem eine Auswertungsvorrichtung (30) zur Berechnung des Füllstandes basierend auf einer Messung des Bandsensors (5) aufweist, vorzugsweise, dass zur Berechnung des Füllstandes die Messung des Bandsensors (5) auf eine Messung des Innensensors (28) bezogen wird.

8. Mähdrescher (3) nach Anspruch 7, **dadurch gekennzeichnet, dass** durch den Bezug der Messung des Bandsensors (5) auf die Messung des Innensensors (28) eine Korrekturfunktion ermittelt wird, welche auf die Berechnung des Füllstandes angewandt wird, vorzugsweise, dass die Korrekturfunktion einen Schüttkegel (18) des Schüttguts (1) zur Berechnung des Füllstandes berücksichtigt, insbesondere, dass die Korrekturfunktion auf einem vorzugsweise errechneten Böschungswinkel (31) des Schüttkegels (18) basiert.

9. Mähdrescher (3) nach Anspruch 8, **dadurch gekennzeichnet, dass** die Korrekturfunktion auf die Berechnung des Füllstandes auch ohne Erfassung des Füllstands durch den Innensensor (28) angewandt wird, vorzugsweise, dass die Korrekturfunktion auf die Berechnung des Füllstandes angewandt wird, wenn der Füllstand außerhalb des Füllstandsteilbereichs (29) liegt.

10. Mähdrescher (3) nach einem der Ansprüche 7 bis 9, **dadurch gekennzeichnet, dass** die Auswertungsvorrichtung (30) den Füllstand basierend auf einer Messung eines Erntegutstroms in einer Erntegutzuführung (32), vorzugsweise einem Kornelevator (14), zu dem Korntank (2a) berechnet und/oder dass die Auswertungsvorrichtung (30) den Füllstand basierend auf einem Entleerungswert, vorzugsweise einer Entleerungsleistung und/oder Entleerungszeit, von Schüttgut (1) in dem Korntank (2a) berechnet.

11. Mähdrescher (3) nach einem der Ansprüche 7 bis 10, **dadurch gekennzeichnet, dass** die Auswertungsvorrichtung (30) den Füllstand basierend auf einem Erntegutparameter, vorzugsweise einer Erntegutart und/oder einer Erntegutfeuchte, berechnet.

12. Mähdrescher (3) nach einem der Ansprüche 1 bis 11 **dadurch gekennzeichnet, dass** die Sensoranordnung (4) einen mechanisch betätigbaren Überlaufsensor (36) zur Ermittelung eines maximalen Füllstands aufweist, vorzugsweise, dass dem Überlaufsensor (36) ein Erfassungsbereich mit einer horizontalen Erstreckung zugeordnet ist, insbesondere, dass der Überlaufsensor (36) im Wesentlichen umlaufend an der Wandung (15) angeordnet ist, weiter insbesondere, dass der Überlaufsensor (15) als Widerstandsschaltleiste ausgebildet ist.

## Claims

1. Combine harvester (3) with a grain tank (2a) for receiving agricultural bulk material (1), in particular harvested material (1 a), and a measuring system for determining the fill level of the bulk material (1), comprising a sensor arrangement (4) for detecting the fill level in the grain tank (2a)
**characterized in that**
the sensor arrangement (4) has an electric band sensor (5) for mechanical actuation by the bulk material (1), such that the band sensor (5) is formed oblong and is equipped to measure the extent of a mechanical actuation length (22), **in that** the band sensor is arranged on a wall (15) of the grain tank (2a) and **in that** the band sensor (5) is preferably equipped to detect up to the maximum fill level of the grain tank (2a).

2. Combine harvester (3)
according to claim 1, **characterized in that** the band sensor (5), at least in sections, is arranged substantially vertical.

3. Combine harvester (3)
according to one of claims 1 to 2, **characterized in that** the band sensor (5) is formed as a resistive connecting block, the electrical resistance of which varies depending on the fill level.

4. Combine harvester (3)
according to one of claims 1 to 3, **characterized in that** the band sensor (5) has a conductive material band (24), a resistive band (25) and an electrically insulating spacer (26) arranged between conductive material band (24) and resistive band (25), preferably such that that the conductive material band (24) is brought into electrically conductive contact with the resistive band (25) along the mechanical actuation length (22).

5. Combine harvester (3)
according to one of claims 1 to 4, **characterized in that** the sensor arrangement (4) has a mechanically actuatable, preferably pressure-sensitive, inner sensor (28) for detecting the fill level, which inner sensor (28) is arranged in the grain tank (2a), is preferably arranged at a distance from the wall (15).

6. Combine harvester (3)
according to claim 5, **characterized in that** the inner sensor (28) is equipped to detect the fill level only in a fill level part-area (29).

7. Combine harvester (3)
according to one of claims 1 to 6, **characterized in that** the measuring system has an evaluation device (30) for calculating the fill level based on a measurement of the band sensor (5), preferably **in that**, for calculating the fill level, the measurement of the band sensor (5) is based on a measurement of the inner sensor (28).

8. Combine harvester (3)
according to claim 7, **characterized in that**, by basing the measurement of the band sensor (5) on the measurement of the inner sensor (28), a correction function is ascertained, which is applied to calculate the fill level, preferably **in that** the correction function takes into consideration a cone slope (18) of the bulk material (1) for calculating the fill level, in particular **in that** the correction function is based on a preferably calculated angle of repose (31) of the cone slope (18).

9. Combine harvester (3)
according to claim 8, **characterized in that** the correction function is also applied to calculate the fill level without detection of the fill level by the inner sensor (28), preferably **in that** the correction function is applied to calculate the fill level when the fill level lies outside the fill level part-area (29).

10. Combine harvester (3)
according to one of claims 7 to 9, **characterized in that** the evaluation device (30) calculates the fill level based on a measurement of a crop flow in a crop feed (32), preferably a grain elevator (14), to the grain tank (2a), and/or **in that** the evaluation device (30) calculates the fill level based on a discharge value, preferably a discharge capacity and/or discharge time, of bulk material (1) in the grain tank (2a).

11. Combine harvester (3)
according to one of claims 7 to 10, **characterized in that** the evaluation device (30) calculates the fill level based on a crop parameter, preferably on a crop type and/or moisture level of a crop.

12. Combine harvester (3)
according to one of claims 1 to 11, **characterized in that** the sensor arrangement (4) has a mechanically actuatable overflow sensor (36) for ascertaining a maximum fill level, preferably **in that** a detection area extending horizontally is assigned to the overflow sensor (36), in particular **in that** the overflow sensor (36) is arranged substantially around the wall (15), further in particular **in that** the overflow sensor (15) is formed as a resistive connecting block.

## Revendications

1. Moissonneuse-batteuse (3) comprenant une trémie à grain (2a) pour recevoir du produit agricole en vrac (1), en particulier du produit récolté (1a), et comprenant un système de mesure pour déterminer le niveau de remplissage du produit en vrac (1), lequel comporte un agencement de capteur (4) pour détecter le niveau de remplissage dans la trémie à grain (2a), **caractérisée en ce que** l'agencement de capteur (4) comporte un capteur ruban électrique (5) en vue d'un actionnement mécanique par le produit en vrac (1), de façon que le capteur ruban (5) soit conçu de manière allongée et soit agencé pour mesurer la longueur de segment d'une longueur d'actionnement mécanique (22), **en ce que** le capteur ruban est disposé contre une paroi (15) de la trémie à grain (2a) et **en ce que** le capteur ruban (5) est agencé de préférence pour détecter jusqu'au niveau de remplissage maximal de la trémie à grain (2a).

2. Moissonneuse-batteuse (3) selon la revendication 1, **caractérisée en ce que**, au moins par endroits, le capteur ruban (5) est disposé sensiblement verticalement.

3. Moissonneuse-batteuse (3) selon une des revendications 1 à 2, **caractérisée en ce que** le capteur ruban (5) est conformé en réglette de commutation résistive dont la résistance électrique varie en fonction du niveau de remplissage.

4. Moissonneuse-batteuse (3) selon une des revendications 1 à 3, **caractérisée en ce que** le capteur ruban (5) comprend une bande de matériau conducteur (24), une bande de résistance (25) et un élément d'écartement (26) disposé entre la bande de matériau conducteur (24) et la bande de résistance (25) et électriquement isolant, de préférence de façon que, le long de la longueur d'actionnement mécanique (22), la bande de matériau conducteur (24) soit amenée en contact électriquement conducteur avec la bande de résistance (25) .

5. Moissonneuse-batteuse (3) selon une des revendications 1 à 4, **caractérisée en ce que** l'agencement de capteur (4) comporte un capteur intérieur (28) actionnable mécaniquement, de préférence sensible à la pression, pour détecter le niveau de remplissage, ledit capteur intérieur (28) étant disposé dans la trémie à grain (2a), de préférence disposé à distance de la paroi (15).

6. Moissonneuse-batteuse (3) selon la revendication 5, **caractérisée en ce que** le capteur intérieur (28) n'est agencé que pour détecter le niveau de remplissage dans une zone partielle de niveau de remplissage (29).

7. Moissonneuse-batteuse (3) selon une des revendications 1 à 6, **caractérisée en ce que** le système de mesure comporte un dispositif d'analyse (30) pour calculer le niveau de remplissage sur la base d'une mesure du capteur ruban (5), de préférence de façon que, pour le calcul du niveau de remplissage, la mesure du capteur ruban (5) soit rapportée à une mesure du capteur intérieur (28).

8. Moissonneuse-batteuse (3) selon la revendication 7, **caractérisée en ce que**, comme la mesure du capteur ruban (5) est rapportée à la mesure du capteur intérieur (28), on obtient une fonction de correction qui est appliquée au calcul du niveau de remplissage, de préférence **en ce que** la fonction de correction prend en compte un cône de chute (18) du produit en vrac (1) pour le calcul du niveau de remplissage, en particulier **en ce que** la fonction de correction repose sur un angle de talus (31) du cône de chute (18).

9. Moissonneuse-batteuse (3) selon la revendication 8, **caractérisée en ce que** la fonction de correction est appliquée au calcul du niveau de remplissage même sans détection du niveau de remplissage par le capteur intérieur (28), de préférence **en ce que** la fonction de correction est appliquée au calcul du niveau de remplissage si le niveau de remplissage se situe à l'extérieur de la zone partielle de niveau de remplissage (29).

10. Moissonneuse-batteuse (3) selon une des revendications 7 à 9, **caractérisée en ce que** le dispositif d'analyse (30) calcule le niveau de remplissage sur la base d'une mesure du flux de produit récolté dans un moyen d'amenée de produit récolté (32), de préférence un élévateur de grains (14), à la trémie à grain (2a) et/ou en ce que le dispositif d'analyse (30) calcule le niveau de remplissage sur la base d'une valeur de vidage, de préférence d'un débit de vidage et/ou d'un temps de vidage, du produit en vrac (1) dans la trémie à grain (2a).

11. Moissonneuse-batteuse (3) selon une des revendications 7 à 10, **caractérisée en ce que** le dispositif d'analyse (30) calcule le niveau de remplissage sur la base d'un paramètre de produit récolté, de préférence d'un type de produit récolté et/ou d'une humidité de produit récolté.

12. Moissonneuse-batteuse (3) selon une des revendications 1 à 1, **caractérisée en ce que** l'agencement de capteur (4) comporte un capteur de débordement à actionnement mécanique (36) pour déterminer un niveau de remplissage maximal, de préférence **en ce qu'**au capteur de débordement (36) est associée une zone de détection avec une extension horizontale, en particulier **en ce que** le capteur de débordement (36) est disposé sensiblement sur le pourtour de la paroi (15), en particulier également **en ce que** le capteur de débordement (15) est conformé en réglette de commutation résistive.
